Europäisches Patentamt

(19) European Patent Office

Office européen des brevets

(11) Veröffentlichungsnummer: **0 169 810**
**B1**

(12) **EUROPÄISCHE PATENTSCHRIFT**

(45) Veröffentlichungstag der Patentschrift: **05.09.90**

(51) Int. Cl.⁵: **C 09 C 1/20**

(21) Anmeldenummer: **85810330.2**

(22) Anmeldetag: **19.07.85**

(54) **Orthorhombische grünstichige Bleichromatpigmente.**

(30) Priorität: **25.07.84 CH 3600/84**
**30.01.85 CH 398/85**

(43) Veröffentlichungstag der Anmeldung:
**29.01.86 Patentblatt 86/05**

(45) Bekanntmachung des Hinweises auf die
Patenterteilung:
**05.09.90 Patentblatt 90/36**

(84) Benannte Vertragsstaaten:
**BE DE FR GB IT NL**

(56) Entgegenhaltungen:
**EP-A-0 138 753**
**US-D- 324 879**

(73) Patentinhaber: **CIBA-GEIGY AG**
**Klybeckstrasse 141**
**CH-4002 Basel (CH)**

(72) Erfinder: **Erkens, Leonardus Johannes Hubertus,
Dr.**
**d'Artagnanlaan 24**
**NL-6213 CK Maastricht (NL)**
Erfinder: **Algra, Gerben Pieter, Dr.**
**Dianahof 50**
**NL-6215 RB Maastricht (NL)**
Erfinder: **Snijders, Jacobus Michiel Hubertus**
**Boviersdaal 13**
**NL-6228 GB Maastricht (NL)**
Erfinder: **Geurts, Herman Joseph Johannes
Maria**
**Alexandereik 9**
**NL-6465 AK Kerkrade (NL)**
Erfinder: **Pugin, André, Dr.**
**La Dollaz**
**CH-1634 Pont-la-Ville (CH)**

**Die Akte enthält technische Angaben, die nach
dem Eingang der Anmeldung eingereicht
wurden und die nicht in dieser Patentschrift
enthalten sind.**

## Beschreibung

Die Erfindung betrifft orthorhombische grünstichige Bleichromatpigmente, die sich in der Applikation durch eine besonders hohe Farbstärke sowie ein gutes Deckvermögen auszeichnen.

Bleichromatpigmente werden seit vielen Jahren insbesondere zum Färben von plastischen Materialien und Anstrichstoffen verwendet-Bevorzugt sind Pigmente, die aus kleinen Teilchen mit geringen Grössenunterschieden bestehen.

Die veröffentlichte US-Patentanmeldung B 324879 (entspricht der US-Patentschrift Nr. 3 923 538) beschreibt grünstichige Bleichromatpigmente in der orthorhombischen Kristallform, die aus einer Bleisalzlösung und einer Lösung enthaltend Chromat- und Sulfationen in Gegenwart von Essigsäure, Aluminium- und Phosphationen hergestellt werden und wobei die Bildung von Bleicarbonat während der Fällung so gut wie möglich vermieden wird. Die Pigmenteigenschafte, vor allem die Lichtechtheit, können durch die Beschichtung mit amorphem Siliziumdioxid verbessert werden.

Gegenstand der vorliegenden Erfindung sind orthorhombische grünstichige Bleichromatpigmente enthaltend Bleichromat und Bleisulfat im Gew.-Verhältnis 60 : 40 bis 100 : 0 und charakterisiert durch eine Farbstärke von 0,067 bis 0,103 bei Standardfarbtiefe 1/25 gemäss DIN 53235 und durch einen Opazitätsfaktor $Y_{schwarz} / Y_{weiss}$ von 0,78 bis 0,87, welche durch die Vermischung der wässrigen Lösung eines Bleisalzes mit der wässrigen Lösung eines Chromates und erforderlichenfalls eines Sulfates in Gegenwart eines Ueberschusses an Bleiionen von 0,003—0,012 Mol pro Liter über die stöchiometrische Menge während bzw. nach der Fällung und unter hoher Turbulenz erhältlich sind, wobei auf den Bleichromatpigmenten während der Fällung oder durch eine Nachbehandlung ein Ueberzug eines anorganischen Umhüllungsmittels erzeugt wird und die so erhaltenen Bleichromatpigmente auf übliche Art aufgearbeitet werden.

Von den obenerwähnten erfindungsgemässen grünstichigen Bleichromatpigmenten sind diejenigen bevorzugt, die Bleichromat und Bleisulfat im Gew.-Verhältnis 65 : 35 bis 90 : 10 und insbesondere 75 : 25 bis 88 : 12 enthalten und durch die gemäss DIN 5033 bestimmten Normfarbwerte X, Y und Z, welche innerhalb des durch die Koordinate $57,0 \leqq X \leqq 61,5$, $61,0 \leqq Y \leqq 67,0$ und $4,0 \leqq Z \leqq 7,0$ begrenzten Farbraums liegen, charakterisiert sind.

Bevorzugt sind orthorhombische Bleichromatpigmente, worin das Gew.-Verhältnis Bleichromat zu Bleisulfat 75 : 25 bis 88 : 12 beträgt.

Als wässrige Lösung eines Bleisalzes verwendet man beispielsweise Bleiacetat, insbesondere Bleinitrat, als wässrige Chromatlösung beispielsweise Natrium- oder Kaliumchromat oder insbesondere Natriumbichromat und als wässrige Sulfatlösung beispielsweise Natrium-, Kalium- oder Ammoniumsulfat.

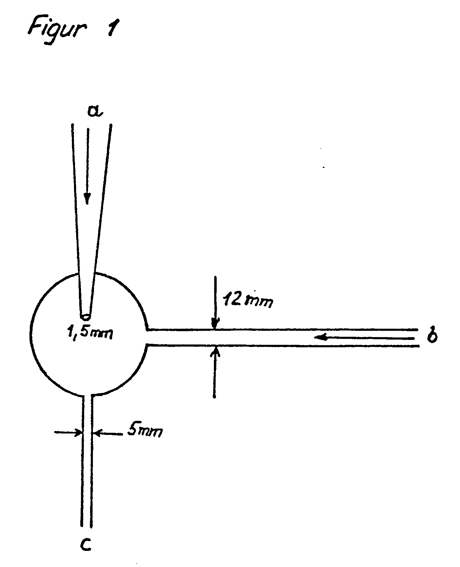

Die hohe Turbulenz kann auf verschiedene Art erreicht werden, beispielsweise durch kontinuierliche Vereinigung der zu vermischenden Lösungen in einer Mischdüse. Darunter ist eine Vorrichtung zu verstehen, bei welcher die zu vermischenden Lösungen auf verhältnismässig kleinem Raum miteinander vereinigt werden, wobei mindestens eine Lösung, vorzugsweise unter erhöhtem Druck, durch eine Düse zugeführt wird. Die Mischdüse kann beispielsweise nach dem Prinzip der Wasserstrahlpumpe konstruiert sein, wobei die Zuführung der einen Flüssigkeit in der Mischdüse der Wasserzufuhr in der Wasserstrahlpumpe und die Zufuhr der anderen Flüssigkeit in der Mischdüse der Verbindung zu dem zu evakuierenden Gefäss in der Wasserstrahlpumpe entspricht und gegebenenfalls auch diese letztere Flüssigkeitszufuhr unter erhöhtem Druck erfolgt (siehe Fig. 1).

Zur Durchführung der Fällung in der Mischdüse wird zweckmässig die wässrige Lösung enthaltend das Chromat und das Sulfat bei einer Strömungsgeschwindigkeit von mindestens 4,9 m/sec mit der wässrigen Lösung des Bleisalzes bei einer Strömungsgeschwindigkeit von mindestens 0,08 m/sec kontinuierlich, vorzugsweise bei Zimmertemperatur, vereinigt. Die Fällung wird vorzugsweise bei Raumtemperatur und einem pH von 2—5 in Gegenwart eines Ueberschusses an Bleiionen von 0,003—0,012 Mol pro Liter über die stöchiometrische Menge durchgeführt.

Eine andere Möglichkeit zur Erzeugung hoher Turbulenz bei der Vereinigung der Lösungen bieten im Handel erhältliche Hochleistungsrührer, wie z.B. der Ultra-Turrax der Fa. Janke und Kunkel KG, Staufen, BRD, der Ystral der Fa. Ystral GmbH, Ballrechten-Dottingen, BRD, der Polytron der Fa. Kinematica, Kriens-Luzern, CH, der Silverson-Rührer der Silverson Mach Ltd., Cheshem/UK oder der Chemcol-Mischer der Chemiecolor AG, Kilchberg-Zürich, CH. Andere Typen von Hochleistungsrührern, die ebenfalls eingesetzt werden können, sind unter anderem der Pendraulik der Pendraulik Machinen und Apparate GmbH, Bad Münder am Deister, BRD und Durchstrommischer wie z.B. jene der Firma Gronfa Process Technik BV/ Rozendaal, NL.

Dabei ist es wichtig, dass die Zugabe der Lösungen, einerseits des Bleisalzes und andererseits des Chromates und Sulfates, in der unmittelbaren Nähe des Schaftes beim Rotor des Hochleistungsrührers erfolgt. Die Vermischung der beiden Hauptkomponenten in der turbulenten Zone kann sowohl kontinuierlich durch gleichzeitige Zuführung als auch diskontinuierlich durch Vorlage der einen und Zudosierung der zweiten Komponente geschehen. Im ersten Fall wird zweckmässig einerseits die Chromatlösung sowie gegebenenfalls die Sulfatlösung und andererseits die Bleisalzlösung durch zwei separate Leitungen in die unmittelbare Nähe des Schaftes beim Rotor geführt. Im zweiten Fall wird beispielsweise die Bleisalzlösung vorgelegt und die Chromatlösung sowie gegebenenfalls die Sulfatlösung durch ein Rohr in unmittelbarer Nähe des Schaftes beim Rotor des Hochleistungsrührers zugegeben. Es muss dafür gesorgt werden, dass nach beendeter Fällung ein Ueberschuss an Bleiionen von 0,003—0,012 Mol/liter über die stöchiometrische Menge vorhanden ist.

Die ausgefällten orthorhombischen Bleichromatpigmente zeichnen sich durch eine feine Teilchengrösse aus.

Zur besseren Ausbildung der Kristallstrukturen erweist sich ein Altern, beispielsweise durch Stehenlassen bei Raumtemperatur oder durch Erwärmen, beispielsweise bis auf 35°C, als vorteilhaft.

Zur Verbesserung der Pigmenteigenschaften, wie beispielsweise die Stabilität gegen Wärme, Licht und chemische Angriffe, werden die Pigmentteilchen während der Fällung oder durch eine Nachbehandlung nach bekannten, beispielsweise in den US-PS 3,370,971, 3,639,133 und 4,046,588 beschriebenen Verfahren, mit einer Schutzhülle überzoecn. Zu diesem Zweck werden auf dem Pigment anorganische Verbindungen, beispielsweise Aluminium-, Titan-, Antimon-, Cerium- oder Siliziumverbindungen bzw. Zinkphosphat oder Gemische davon, ausgefällt.

Die Menge des Umhüllungsmittels beträgt zweckmässig 2—40, vorzugsweise 2—20 und insbesondere 3—10 % bezogen auf das Gesamtgewicht des Pigmentes.

Die erhaltenen orthorhombischen Bleichromatpigmente können zusätzlich mit texturverbessernden Mitteln behandelt werden, beispielsweise mit langkettigen aliphatischen Alkoholen, Estern, Säuren oder deren Salzen, Aminen, Amiden, Wachsen oder harzartigen Substanzen, wie Abietinsäure, deren Hydrierungsprodukten, Estern oder Salzen, ferner mit nichtionogenen, anionischen oder kationischen oberflächenaktiven Mitteln.

Die Aufarbeitung der erfindungsgemässen Bleichromatpigmente erfolgt auf übliche Art, beispielsweise durch Abfiltrieren, Auswaschen des Filterkuchens mit Wasser zur Entfernung löslicher Salze, Trocknen und Pulverisieren.

Die Normfarbwerte X, Y und Z der Bleichromatpigmente werden gemäss DIN 5033 bestimmt.

Die erfindungsgemässen Bleichromatpigmente zeichnen sich durch hohe Farbstärke und hohes Deckvermögen aus.

Die Farbstärke wird durch dasjenige Verhältnis von in einem Lack appliziertem Buntpigment zu Weisspigment ausgedrückt, welches zur Standardfarbtiefe 1/25 gemäss DIN 53235 führt. Dieses Verhältnis gibt also diejenige Menge Buntpigent an, welche in Abmischung mit einer gegebenen Menge Weisspigment die Herstellung einer Lackausfärbung bei Standardfarbtiefe 1/25 erlaubt.

Zur Beurteilung des Deckvermögens wird eine Lackausfärbung im Vollton über Schwarz-Weiss-Kontrastkarton hergestellt und daran der Opazitätsfaktor $Y_{schwarz}$ zu $Y_{weiss}$ (Kontrastverhältnis) nach Farbmessungen am Lackfilm über schwarzem und weissem Untergrund bestimmt.

Die erfindungsgemässen orthorhombischen Bleichromatpigmente besitzen ferner in der Applikation bei hoher Farbstärke eine gute Lichtbeständigkeit sowie eine hohe Sättigung. Zudem zeichnen sie sich trotz ihrer hohen Farbstärke durch gutes Fliessverhalten der daraus hergestellten Druckfarben und Lacken aus.

Ferner können entgegen den bisherigen Erkenntnissen [wie z.B. in Kittel, "Pigmente", (1960), Seite 278, Zeilen 1 bis 7 beschrieben] überraschenderweise stabile orthorhombische Bleichromate enthaltend Bleichromat und Bleisulfat mit bis zu 100 Gew.- % Bleichromatanteil hergestellt werden.

Die orthorhombischen Bleichromatpigmente, die mittels Hochleistungsrührer hergestellt werden und Bleichromat und Bleisulfat im Gewichtsverhältnis 91 : 9 bis 100 : 0 enthalten stellen auch bezüglich des Verhältnisses zwischen Bleichromat und Bleisulfat neue Verbindungen dar. Bevorzugte Verbindungen darunter sind orthorhombische Bleichromatpigmente mit einem Gew.-Verhältnis Bleichromat zu Bleisulfat von 91 : 9 bis 96 : 4.

Der Bleichromatgehalt wird nach Aufschliessen des Pigments gemäss dem in "Volumetric Analysis, Volume III, Titration Methods" von I.M. Kolthoff, R. Belcher, V.A. Stenger und G. Matsuyama (Interscience Publishers; New York, 1975) beschriebenen Methode bestimmt.

Der Bleisulphatgehalt wird nach Aufschliessen des Pigments gemäss dem in "Vogel's Textbook of Quantitative Inorganic Analysis", Vierte Edition, von J. Basset, R.C. Denney, G.H. Jeffery und J. Mendham (Longman; New York, 1978) beschriebenen Methode bestimmt.

Die erfindungsgemässen Pigmente können einzeln oder in Mischungen untereinander oder mit anderen Pigmenten, z.B. Phthalocyaninblau, Molybdatorange oder Berlinerblau zum Pigmentieren von hochmolekularem organischem Material verwendet werden, z.B. von Celluloseäthern und -estern, Acetylcellulose, Nitrocellulose, natürlichen Harzen oder Kunstharzen, wie Polymerisations oder Kondensationsharze, z.B. Aminoplaste, insbesondere Harnstoff- und Melamin-Formaldehydharze, Phenoplaste, Alkydharze, Polyolefine, wie Polyäthylen oder Polypropylen, ferner Polystyrol, Polyvinylchlorid, Polyacrylnitril, Polyacrylsäureester, Polycarbonate, Gummi, Casein, Silikon und Silikonharze.

Die erwähnten hochmolekularen Verbindungen können sowohl als plastische Massen, Schmelzen oder in Form von Spinnlösungen, Lacken oder insbesondere Druckfarben vorliegen. Je nach Verwendungszweck erweist es sich als vorteilhaft, die neuen Pigmente als Toner oder in Form von Präparaten zu verwenden.

In den nachfolgenden Beispielen und in der Beschreibung bedeuten Teile, sofern nichts anderes angegeben, Gew.-Teile und die Prozente Gewichtsprozente.

Beispiel 1:

In einem 5 l-Reaktionsgefäss mit Hochleistungsrührer (Durchmesser des Rotors 4,0 cm, Umfangsgeschwindigkeit des Rotors 4 m/sec) legt man 2500 ml einer wässrigen Lösung enthaltend 195 g Bleinitrat, 11,4 g Zinknitrat · 3H$_2$O und 170 ml einer 10 %igen Natriumhydroxidlösung vor. Bei Raumtemperatur gibt man innerhalb von 2 Min. in unmittelbarer Nähe des Schaftes beim Rotor des Hochleistungsrührers mittels eines Glasrohres 370 ml einer wässrigen Lösung enthaltend 63,7 g Natriumbichromat · 2H$_2$O, 10,3 g Natriumsulfat und 10,3 g Aluminiumsulfat · 18H$_2$O zu.

Nach der Fällung ist der Ueberschuss an Blei 0,01 Mol Pb$^{2+}$/l über die stöchiometrische Menge. Danach wird eine Lösung von 19 g Titanoxychlorid in 120 ml Wasser zugegeben. Das pH wird auf 6,0 durch Zugabe von 20 g Natriumcarbonat in 200 ml Wasser eingestellt. Danach wird der Niederschlag auf 35°C erwärmt.

Zur Reifung der Kristallstruktur lässt man den Niederschlag während 90 Min. absetzen. Anschliessend wird während einer Stunde gerührt. Zur Umhüllung der Pigmentteilchen wird eine Lösung von 7,5 g Aluminiumsulfat in 120 ml Wasser und danach eine Lösung von 10 g 75 %iger Phosphorsäure in 120 ml Wasser zugegeben. Der End-pH-Wert wird durch Zugabe von 20 g Natriumcarbonat in 200 ml Wasser auf 8.0 eingestellt. Der Niederschlag wird abfiltriert, zur Entfernung löslicher Salze mit Wasser gewaschen und bei einer Temperatur von 90°C getrocknet.

Zusammensetzung des Mischkristalles: PbCrO$_4$ 78 %, PbSO$_4$ 22 %. Anteil der Umhüllung am Gesamtgewicht des Pigmentes: 7 %. Die Normfarbwerte betragen: X = 60,0; Y = 63,9 und Z = 6,4. Der Opazitätsfaktor Y$_{schwarz}$ zu Y$_{weiss}$ beträgt 0,78 und die Farbstärke (bei 1/25 Standardfarbtiefe) 0,096.

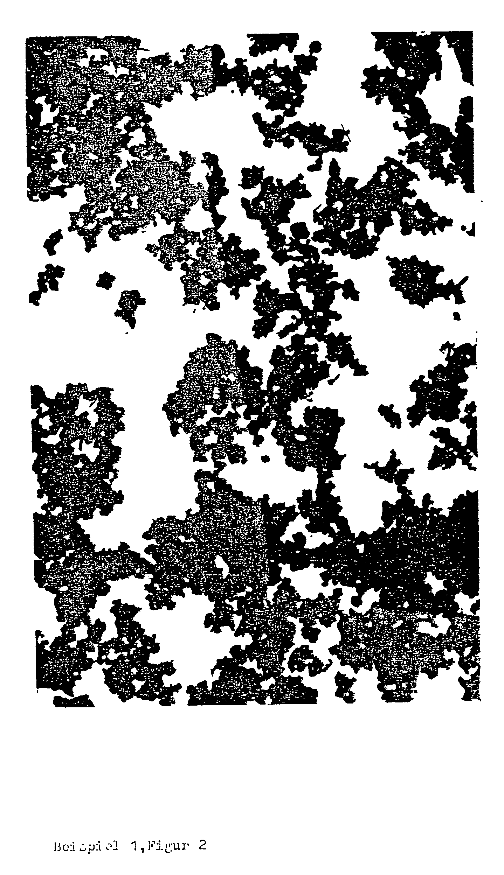

Figur 2 zeigt eine Aufnahme dieser Mischkristalle im Elektronenmikroskop bei 20'000-facher Vergrösserung der in einem 50 %igen Aethylalkohol-Wasser-Gemisch während einiger Sekunden mit Ultraschall dispergierten Pigmentteilchen.

Der Bleichromatgehalt wird nach folgender Arbeitsweise bestimmt:

0.250 g Pigment werden in einen 300 ml Erlenmeyer-Kolben mit geschliffenen Stöpsel gegeben. Dann wird 10 ml 4N-Natronlauge zugegeben und erhitzt bis das Bleichromat völlig gelöst ist. Das Gemisch wird mit 40 ml destilliertem Wasser verdünnt und auf Zimmertemperatur gekühlt. Darauf wird 0,5 g Natriumcarbonat (Wasserfrei). 4,0 g Kaliumiodid und 30 ml Salzsäure 4N zugegeben. Der Erlenmeyer-Kolben wird sofort mit dem Stöpsel abgeschlossen und erforderlichenfalls gekühlt.

Das Gemisch wird dann für zwei Stunden im Dunkeln gelaasen und ab und zu geschwenkt. Darauf wird 80 ml destilliertes Wasser und 0,5 g Natriumcarbonat (Wasserfrei) zugegeben. Das Gemisch wird mit Natriumthiosulphat titriert. In der Nähe des Titrationsendpunktes wird zusätzlich Stärkenmehl zugegeben.

Der Bleisulphatgehalt wird nach folgender arbeitsweise bestimmt:

0,5 bis 1,0 g Pigment werden sehr genau abgewogen. Das Pigment wird zusammen mit 6,0 g Soda in ein 150 ml Becherglas gegeben und gemischt, worauf 50 ml heisses Wasser zugegeben wird. Das Gemisch wird gekocht bis das Pigment völlig gelöst ist. Darauf wird zusätzlich 50 ml Wasser zugegeben und das Becherglas wird für eine halbe Stunde auf ein Wasserbad (90—95°C) gestellt. Das Gemisch wird filtriert und mit einer 1 %-igen Sodalösung gewaschen. Das Filtrat wird in ein 600 ml Becherglas gegeben und bis zum Farbumschlag mit Salzsäure vorsichtig neutralisiert, worauf zusätzlich 10 ml Salzsäure zugegeben wird. Danach werden 10 ml Wasserstoffperoxyd (3 %) zugegeben und das Gemisch für 10 Minuten gekocht bis das Chromat zum dreiwertigen Chrom reduziert ist. Dann werden 50 ml Eisessig zugegeben und das Gemisch auf etwa 400 ml verdünnt.

Die Lösung wird auf 100°C erwärmt, worauf 50 ml einer kochenden Bariumchloridlösung (0,1N) schnell zugegeben wird. Das Gemisch wird auf überschüssiges Barium analysiert und für zwei Stunden auf dem Wasserbad erhitzt.

Das Bariumsulphat-Präzipitat wird filtriert (Filter MN 640 d) und mit HCl (1 : 99) und heisses Wasser chloridfrei gewaschen. Das Präzipitat wird bei 105—110°C getrocknet und bei 800°C eingeäschert und geglüht bis zur Gewichtskonstanz.

Nach diesen Methoden wird der Bleichromat- und Bleisulfat-Gehalt auch in allen nachfolgenden Beispielen bestimmt.

Beispiel 2:

Stellt man nach dem in Beispiel 1 beschriebenen Verfahren ein Pigment im Verhältnis PbCrO$_4$/PbSO$_4$ von 89 zu 11 her, so hat dieses die Normfarbwerte X = 59,7, Y = 61,7 und Z = 4,7, einen Opazitätsfaktor von 0,84 und eine Farbstärke von 0,079 bei Standardfarbtiefe 1/25.

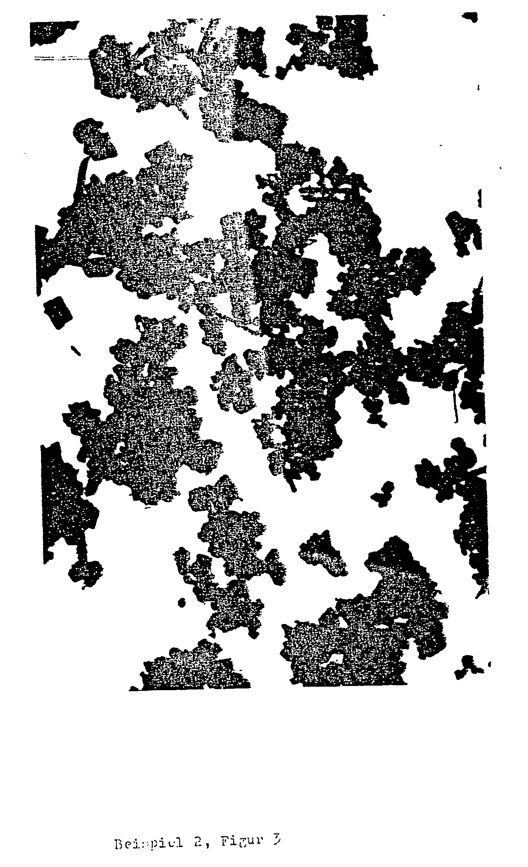

Figur 3 zeigt eine Aufnahme dieser Mischkristalle im Elektronenmikroskop bei 20'000-facher Vergrösserung der in einem 50 %igen Aethylalkohol-Wasser-Gemisch während einiger Sekunden mit Ultraschall dispergierten Pigmentteilchen.

Beispiel 3:

In einem Reaktionsgefäss mit Hochleistungsrührer (Durchmesser des Rotors 4,0 cm, Umfangsgeschwindigkeit des Rotors 4 m/sec) legt man 5000 ml Wasser, 16 g Bleinitrat und 11,4 g Zinknitrat · 3H$_2$O vor. Bei Raumtemperatur gibt man innerhalb von 10 Min. in unmittelbarer Nähes des Schaftes beim Rotor des Hochleistungsrührers mittels eines Glasrohres 1000 ml einer wässrigen Lösung enthaltend 63,7 g Natriumbichromat · 2H$_2$O, 6,1 g wasserfreies Natriumsulfat · 9,7 g Aluminiumsulfat · 18H$_2$O und 1000 ml einer wässrigen Lösung enthaltend 166 g Bleinitrat und 18 g 100 %iges Natriumhydroxid gleichzeitig zusammen.

Während und nach der Fällung ist der Ueberschuss an Blei 0,01 Mol $Pb^{2+}$/l über der stöchiometrische Menge.

Danach wird eine Lösung von 19 g Titanoxychlorid in 120 ml Wasser zugegeben. Das pH wird auf 6,0 durch Zugabe von 20 g Natriumcarbonat in 200 ml Wasser eingestellt. Der Niederschlag wird auf 35°C erwärmt. Zur Reifung der Kristallstruktur lässt man den Niederschlag während 90 Min. absetzen. Anschliessend wird während einer Stunde gerührt.

Zur Umhüllung der Pigmentteilchen wird eine Lösung von 7,5 g Aluminiumsulfat in 120 ml Wasser und danach eine Lösung von 10 g 75 %iger Phosphorsäure in 120 ml Wasser zugegeben. Der End-pH-Wert wird durch Zugabe von 20 g Natriumcarbonat in 200 ml Wasser auf 8,0 eingestellt. Der Niederschlag wird abfiltriert, zur Entfernung löslicher Salze mit Wasser gewaschen und bei einer Temperatur von 90°C getrocknet.

Zusammensetzung des Mischkristalles: $PbCrO_4$ 83 %; $PbSO_4$ 17 %. Anteil der Umhüllung an Gesamtgewicht des Pigmentes: 7 %. Die Normfarbwerte betragen: X = 59,2; Y= 61,0 und Z = 4,5. Der Opazitätsfaktor $Y_{schwarz}$ zu $Y_{weiss}$ beträgt 0,78 und die Farbstärke (bei 1/25 Standardfarbtiefe) 0,113.

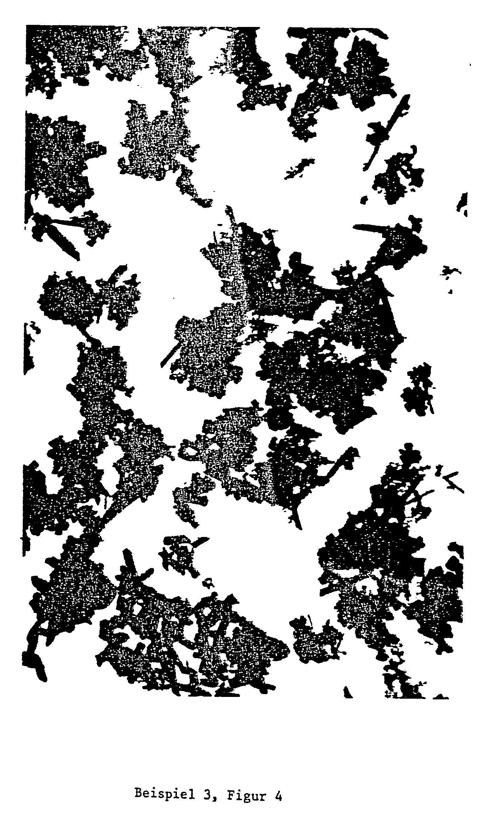

Figur 4 zeigt eine Aufnahme dieser Mischkristalle im Elektronenmikroskop bei 20'000-facher Vergrösserung der in einem 50 %igen Aethylalkohol-Wasser-Gemisch während einiger Sekunden mit Ultraschall dispergierten Pigmentteilchen.

Beispiel 4:

Stellt man nach dem in Beispiel 3 beschriebenen Verfahren ein Pigment im Verhältnis $PbCrO_4$/$PbSO_4$ von 87 % zu 13 % her, so hat dieses die Normfarbwerte X = 59,0, Y= 61,0 und Z = 4,6, einen Opazitätsfaktor von 0,83 und eine Farbstärke von 0,089 bei Standardfarbtiefe 1/25.

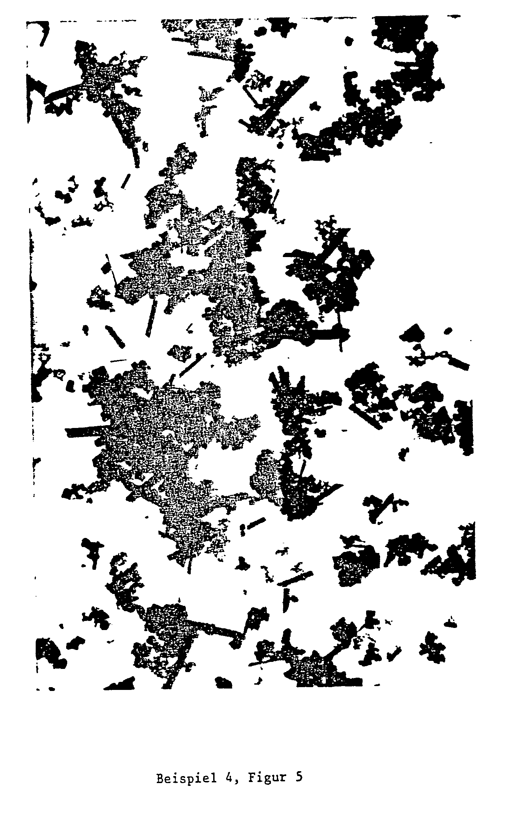

Figur 5 zeigt eine Aufnahme dieser Mischkristalle im Elektronenmikroskop bei 20'000-facher Vergrösserung der in einem 50 %igen Aethylalkohol-Wasser-Gemisch während einiger Sekunden mit Ultraschall dispergierten Pigmentteilchen.

Beispiel 5:

In einem 50 1-Reaktionsgefäss mit Hochleistungsrührer (Durchmesser des Rotors 4,0 cm, Umfangsgeschwindigkeit des Rotors 17 m/sec.) legt man 25 Liter einer wässrigen Lösung enthaltend 972,0 g Bleinitrat, 114,0 g Zinknitrat · $3H_2O$, 12,5 g Natriumaluminat ($NaAlO_2$) und 650 ml einer 10 %-igen Natriumhydroxidlösung vor.

Bei Raumtemperatur gibt man innerhalb von 5 Minuten in unmittelbarer Nähe des Schaftes beim Rotor des Hochleistungsrührers mittels eines Glasrohres 1500 ml einer wässrigen Lösung enthaltend 357,5 g Natriumbichromat · $2H_2O$ und 12,5 g wasserfreies Natriumsulfat zu. Nach der Fällung ist der Ueberschuss an Blei 0,01 Mol $Pb^{2+}$/l über die stöchiometrische Menge.

Der pH-Wert der erhaltenen Reaktionsmischung wird auf 6,0 durch Zugabe von etwa 90 g wasserfreiem Natriumcarbonat in 500 ml Wasser eingestellt.

Zur Umhüllung der Pigmentteilchen wird dann eine Lösung von 37,5 g Aluminiumsulfat · $18H_2O$ in 400 ml Wasser und danach eine Lösung von 50 g einer 75 %-igen $H_3PO_4$-Lösung in 400 ml Wasser zugegeben. Der End-pH-Wert wird durch Zugabe von etwa 90 g wasserfreiem Natriumcarbonat in 500 ml Wasser auf 8,0 eingestellt. Der erhaltene Niederschlag wird abfiltriert, zur Entfernung löslicher Salze mit Wasser gewaschen und bei einer Temperatur von 90°C getrocknet.

Zusammensetzung des erhaltenen Mischkristalles:

94,7 % $PbCrO_4$ und 5,3 % $PbSO_4$.

Anteil der Umhüllung am Gesamtgewicht des Pigmentes: 7 %.

Die Normfarbwerte betragen: X = 59,6, Y= 60,6 und Z = 4,4.

Die Farbstärke (bei 1/25 Standardfarbtiefe) beträgt 0,072 und der Opazitätsfaktor $Y_{schwarz}$ zu $Y_{weiss}$ 0,79.

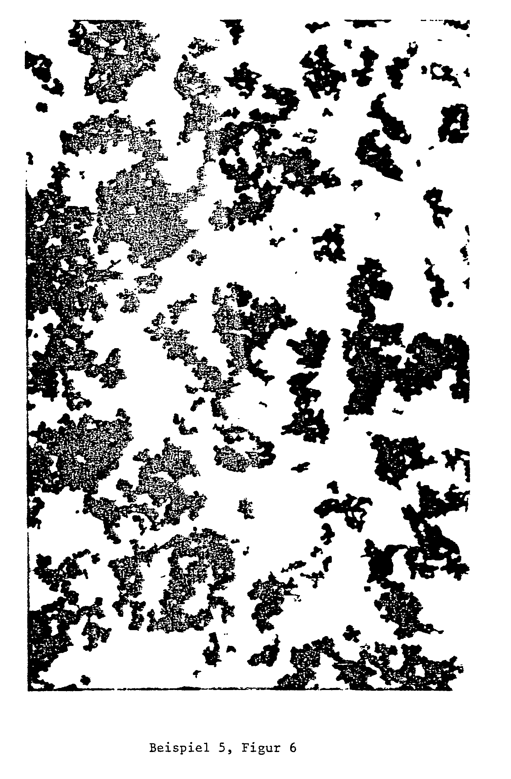

Figur 6 zeigt eine elektronenmikroskopische Aufnahme dieser Mischkristalle bei 20'000-facher Vergrösserung der in einem 50 %-igen Aethylalkohol-Wasser-Gemisch während einiger Sekunden mit Ultraschall dispergierten Pigmentteilchen.

Beispiel 6:

In einem 50 l-Reaktionsgefäss mit Hochleistungsrührer (Durchmesser des Rotors 4,0 cm, Umfangsgeschwindigkeit des Rotors 17 m/sec.) legt man 25 Liter einer wässrigen Lösung enthaltend 943,0 g Bleinitrat, 114,0 g Zinknitrat·$3H_2O$, 12,5 g Natriumaluminat ($NaAlO_2$) und 650 ml einer 10 %-igen Natriumhydroxydlösung vor.

Bei Raumtemperatur gibt man innerhalb von 5 Minuten in unmittelbarer Nähe des Schaftes beim Rotor des Hochleistungsrührers mittels eines Glasrohres 1500 ml einer wässrigen Lösung enthaltend 357,5 g Natriumbichromat · $2H_2O$ zu.

Nach der Fällung ist der Ueberschuss an Blei 0,01 Mol $Pb^{2+}$/l über die stöchiometrische Menge.

Der pH-Wert der erhaltenen Reaktionsmischung wird auf 6,0 durch Zugabe von etwa 90 g wasserfreiem Natriumcarbonat in 500 ml Wasser eingestellt.

Zur Umhüllung der Pigmentteilchen wird dann eine Lösung von 37,5 g Aluminiumsulfat · $18H_2O$ in 400 ml Wasser und danach eine Lösung von 50 g einer 75 %-igen $H_3PO_4$-Lösung in 400 ml Wasser zugegeben. Der End-PH-Wert wird durch Zugabe von etwa 90 g wasserfreiem Natriumcarbonat in 500 ml Wasser auf 8,0 eingestellt, der erhaltene Niederschlag abfiltriert, zur Entfernung löslicher Salze dann mit Wasser gewaschen, und schliesslich bei einer Temperatur von 90°C getrocknet.

Zusammensetzung des Mischkristalles:

97,6 % $PbCrO_4$ und 2,4 % $PbSO_4$.

Anteil der Umhüllung am Gesamtgewicht des Pigmentes: 7 %.

Die Normfarbwerte betragen: X = 60,0. Y = 61,4 und Z = 4,4.

Die Farbstärke (bei Standardfarbtiefe 1 : 25) beträgt 0,069 und der Opazitätsfaktor $Y_{schwarz}$ zu $Y_{weiss}$ 0,82.

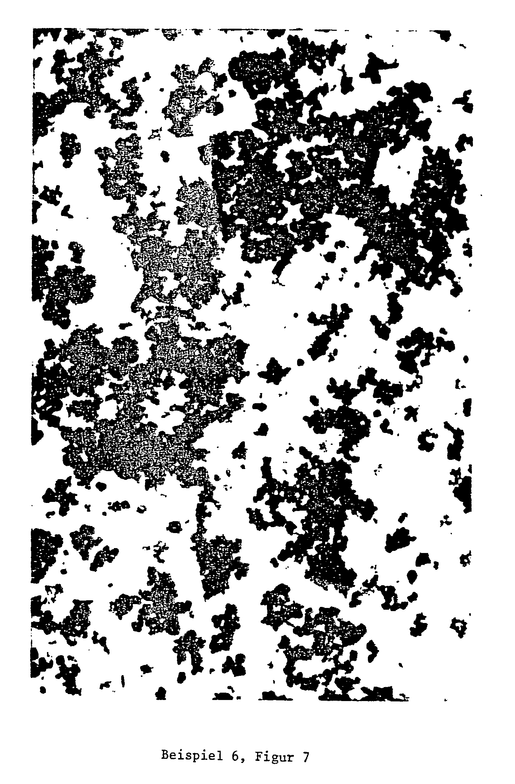

Figur 7 zeigt eine elektronenmikroskopische Aufnahme dieser Mischkristalle bei 20'000-facher Vergrösserung der in einem 50 %-igen Aethylalkohol-Wasser-Gemisch während einiger Sekunden mit Ultraschall dispergierten Pigmentteilchen.

Beispiel 7:

In einem 50 l-Reaktionsgefäss mit Hochleistungsrührer (Durchmesser des Rotors 4,0 cm, Umfangsgeschwindigkeit des Rotors 17 m/sec.) legt man 25 Liter einer wässrigen (dest. Wasser) Lösung enthaltend 943,0 g Bleinitrat p.a., 114,0 g Zinknitrat · $3H_2O$ p.a., 12,5 g Natriumaluminat ($NaAlO_2 · 0H_2O$) und 650 ml einer 10 %-igen Natriumhydroxydlösung p.a. vor.

Bei Raumtemperatur gibt man innerhalb von 5 Minuten in unmittelbarer Nähe des Schaftes beim Rotor des Hochleistungsrührers mittels eines Glasrohres 1500 ml einer wässrigen Lösung enthaltend 357,5 g Natriumbichromat · $2H_2O$ p.a. zu. Nach der Fällung ist der Ueberschuss an Blei 0,01 Mol $Pb^{2+}$/l über die stöchiometrische Menge.

Der pH-Wert wird auf 6,0 durch Zugabe von etwa 90 g wasserfreiem Natriumcarbonat in 500 ml destilliertem Wasser eingestellt.

Zur Umhüllung der Pigmentteilchen wird eine Lösung von 37,5 g Aluminiumsulfat · $18H_2O$ p.a. in 400 ml destilliertem Wasser und danach eine Lösung von 50 g 75 %-igen $H_3PO_4$ p.a.-Lösung in 400 ml destilliertem Wasser zugegeben. Der End-pH-Wert wird durch Zugabe von etwa 90 g wasserfreiem Natriumcarbonat p.a. in 500 ml destilliertem Wasser auf 8,0 eingestellt. Der Niederschlag wird abfiltriert, zur Entfernung löslicher Salze mit destilliertem Wasser gewaschen und bei einer Temperatur von 90°C getrocknet.

Zusammensetzung des Mischkristalles:

99,9 % $PbCrO_4$ und 0,1 % $PbSO_4$

Anteil der Umhüllung am Gesamtgewicht des Pigmentes: 7 %. Die Normfarbwerte betragen: X = 58,9, Y= 59,5 und Z = 3,9.

Die Farbstärke (bei Standardfarbtiefe 1 : 25) beträgt 0,070 und der Opazitätsfaktor $Y_{schwarz}$ zu $Y_{weiss}$ 0,83.

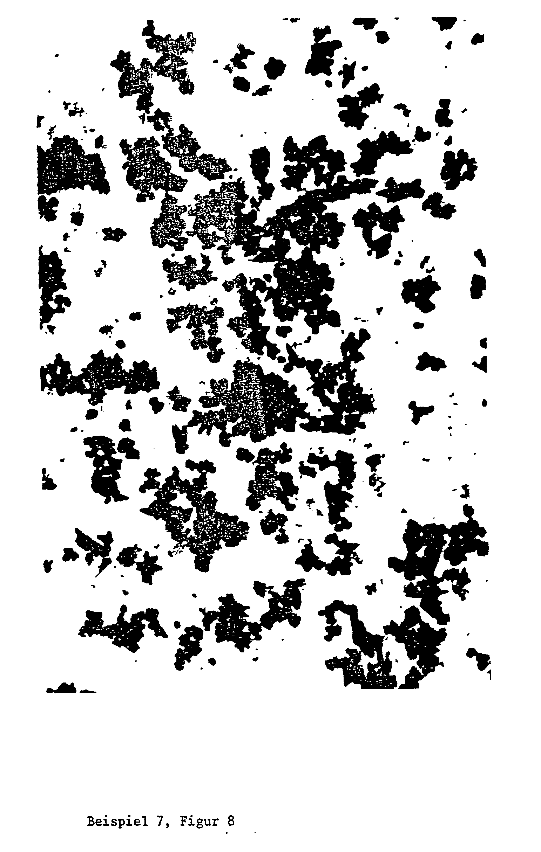

Figur 8 zeigt eine Elektronenmikroskopische Aufnahme dieser Mischkristalle bei 20'000-facher Vergrösserung der in einem 50 %-igen Aethylalkohol-Wasser-Gemisch während einigen Sekunden mit Ultraschall dispergierten Pigmentteilchen.

Beispiel 8:

In einem 5 l-Reaktionsgefäss mit Hochleistungsrührer (Durchmesser des Rotors 4,0 cm, Umfangsgeschwindigkeit des Rotors 4 m/sec) legt man 2500 ml einer wässrigen Lösung enthaltend 195 g Bleinitrat, 11,4 g Zinknitrat · $3H_2O$ und 170 ml einer 10 %-igen Natriumhydroxidlösung vor. Bei Raumtemperatur gibt man innerhalb von 2 Minuten in unmittelbarer Nähe des Schaftes beim Rotor des Hochleistungsrührers mittels eines Glasrohres 370 ml einer wässrigen Lösung enthaltend 48,2 g Natriumbichromat · $2H_2O$, 25,3 g Natriumsulfat und 10,3 g Aluminiumsulfat·$18H_2O$ zu.

Nach der Fällung ist der Ueberschuss an Blei 0,01 Mol $Pb^{2+}$/l über die stöchiometrische Menge. Danach wird eine Lösung von 19 g Titanoxychlorid in 120 ml Wasser zugegeben. Das pH wird auf 6,0 durch Zugabe von 20 g Natriumcarbonat in 200 ml Wasser eingestellt. Danach wird der Niederschlag auf 35°C erwärmt.

Zur Reifung der Kristallstruktur lässt man den Niederschlag während 90 Minuten absetzen. Anschliessend wird während einer Stunde gerührt. Zur Umhüllung der Pigmentteilchen wird eine Lösung von 7,5 g Aluminiumsulfat in 120 ml Wasser und danach eine Lösung von 10 g 75 %-iger Phosphorsäure in 120 ml Wasser zugegeben. Der End-pH-Wert wird durch Zugabe von 20 g Natriumcarbonat in 200 ml Wasser auf 8.0 eingestellt. Der Niederschlag wird abfiltriert, zur Entfernung löslicher Salze mit Wasser gewaschen und bei einer Temperatur von 90°C getrocknet.

Zusammensetzung des Mischkristalles: $PbCrO_4$ 60 %, $PbSO_4$ 40 %. Anteil der Umhüllung am Gesamtgewicht des Pigmentes: 7 %.

Beispiel 9: (Anwendungsbeispiel im Buchdruck)

1,0 g des gemäss Beispiel 1 erhaltenen Bleichromatpigmentes wird mit 4,0 g Druckfirnis der Zusammensetzung:

29,4 % Leinöl-Standöl (300 Poise),

67,2 % Leinöl-Standöl (20 Poise),

2.1 % Kobaltoctoat (8 % Co) und

1,3 % Bleioctoat (25 % Pb)

6

EP 0 169 810 B1

auf einer Engelsmann-Anreibmaschine fein angerieben und hierauf mit Hilfe eines Klischees im Buchdruckverfahren mit 1 g/m³ auf Kunstdruckpapier gedruckt. Man erhält einen starken gelben Ton mit guter Farbstärke sowie gutem Glanz.

Das Pigment eignet sich auch für andere Druckverfahren, wie Tiefdruck, Offsetdruck, Flexodruck und ergibt hier ebenfalls sehr gute Resultate.

Beispiel 10: (Anwendungsbeispiel in PVC)

0,6 g des gemäss Beispiel 1 erhaltenen Pigments werden mit 76 g Polyvinylchlorid, 33 g Dioctylphthalat, 2 g Dibutylzinndilaurat und 2 g Titandioxid zusammengemischt und auf dem Walzenstuhl während 15 Minuten bei 160°C zu einer dünnen Folie verarbeitet. Die so erzeugte grünstichig gelbe Färbung ist farbstark, migrations- und lichtbeständig.

Beispiel 11: (Anwendungsbeispiel in Polystyrol)

0,05 g des gemäss Beispiel 1 erhaltenen Pigments werden mit 100 g Polystyrol trocken gemischt. Das Gemisch wird bei Temperaturen zwischen 180 und 220°C geknetet, bis eine homogene Einfärbung entstanden ist. Man lässt die gefärbte Masse abkühlen und vermahlt sie in der Mühle zu einer Teilchengrösse von etwa 2 bis 4 mm.

Das so erhältliche Granulat wird in einer Spritzgussmaschine bei Temperaturen zwischen 220 und 300°C zu Formkörpern verarbeitet. Man erhält grünstichig gelb gefärbte Massen von guter Licht- und Temperaturbeständigkeit.

Beispiel 12: (Anwendungsbeispiel in einem Alkydmelamin-Lack)

60 g einer 60 %igen Lösung eines nicht-trocknenden Alkydharzes in Xylol (Handelsname Beckosol® 27—320 der Firma Reichold-Albert-Chemie), 36 g einer 50 %igen Lösung eines Melamin-Formaldehyd-Harzes in einem Alkohol-Aromaten-Gemisch (Handelsname Super-Beckamin® 13—501 der Firma Reichold-Albert-Chemie), 2 g Xylol und 2 g Methylcellosolve werden vermischt. 100 g dieses Gemisches werden mit Hilfe eines Rührers zu einer homogenen Lacklösung verrührt. 95 g des so erhaltenen Klarlackes und 5 g des gemäss Beispiel 1 erhaltenen Pigmentes werden in einer Kugelmühle während 72 Stunden gemahlen. Der eingefärbte Lack wird dann nach üblicher Spritzmethode auf ein Blech appliziert und 30 Minuten bei 120°C eingebrannt. Man erhält eine gelbe Lackierung von guter Lichtbeständigkeit.

Herstellung der Lackapplikation zur Ermittlung der Normfarbwerte, der Farbstärke und des Opazitätsfaktors (Kontrastverhältnisses):

A. Arbeitsweise zur Herstellung des Volltonlackes

Zur Ermittlung der Normfarbwerte sowie des Opazitätsfaktors werden auf folgende Weise Lackausfärbungen hergestellt:

In einem 100 ml Glasbehälter mit Deckel werden hintereinander zugegeben:

70 g Glasperlen, φ 3 mm,

13,6 g Dispergiermedium und

10,0 g Buntpigment.

Das Dispergiermedium besteht aus:

34,4 % Alkydlack [Sigmol® 820, Sojaphthalat eines Alkydharzes, 70 Gew. %, in Shellsol® H (white spirit) gelöst, Firma Necarbo],

47 % Lösungsmittel (Shellsol® H),

0,3 % Dispergierungsmittel [Borchichen® 911 (Soja Lecithin) der Firma Borchers],

0,8 % Antifellmittel (Luaktine, 10 % in Shellsol® H),

1,1 % Antiflockungsmittel (1 %-iges Silikonöl in Shellsol® H, Fa. Byk-Malinckrodt),

16,4 % Sikkativ (Octanoatsalzgemisch, 13 % Pb, 65 % Co, 0,9 % Ca).

Zur Dispergierung wird der Glasbehälter mit Inhalt während 10 Min. mit dem Dispergiergerät "Red Devil" geschüttelt. Anschliessend werden 35 Gew.Teile Sigmol® 820 zugegeben und erneut 10 Min. mit dem Dispergiergerät "Red Devil" dispergiert. Auf einer Anstrichkarte (Karton der Firma Leneta, USA, Form 2A und WdX) wird mit dem Filmziehgerät Bird Applikator BA-30 ein Lackfilm aufgebracht, der anschliessend während 12 Stunden an der Luft getrocknet wird (Nassfilmdicke: 80 Micron; Trockenfilmdicke: 30 Micron). Danach werden die Farbmessungen durchgeführt.

B. Arbeitsweise zur Herstellung des Weissverschnittlackes

Zur Ermittlung der Farbstärke wird auf die gleiche obige Weise eine Lackausfärbung hergestellt, mit dem Unterschied, dass anstelle von 10,0 g Buntpigment lediglich die zur Einstellung der Standardfarbtiefe von 1/25 benötigte Menge Buntpigment und zusätzlich 10,0 g Titandioxid (Typ RCR-2 der Firma Tioxide) zugegeben werden.

C. Farbmessung

Die Farbmessungen werden an den beschriebenen Lackapplikationen durchgeführt. Zur Bestimmung

7

der Normfarbwerte X, Y und Z und der Farbstärke wird an den Lackfilmen nur über weissem Untergrund gemessen. Für die Bestimmung des Opazitätsfaktors $Y_{schwarz} / Y_{weiss}$ werden Farbmessungen an den Lackfilmen über schwarzem und weissem Untergrund vorgenommen.

Die Messung der 16 Reflektionswerte und die Berechnung der Normfarbwerte X, Y und Z geschehen gemäss DIN 5033 für Normlichtart D 65 und den 10° Normbeobachter, mit Glanzeinschluss. Ueber die Bestimmung der Farbstärke auf der Basis von DIN 53235 wurde bereits auf Seite 5, Zeilen 6 bis 10, berichtet.

Technische Daten des Messapparates
Spektrophotometer: Zeiss RFC-3;
Geometrie: d/8°;
Messöffnung: 30 mm;
Wellenlänge: 400—700 nm, jede 20 nm;

Eichung
Der Weisstandard wird aus $BaSO_4$ für Farbmessung (Merck) hergestellt. Zu diesem Zweck wird eine Tablette gepresst und die gemessenen Werte als Absolutwerte eingegeben. Der Schwarzstandard (Zeiss) ist ein einseitig geschlossenes und mit Samt ausgekleidetes Rohr (Reflektionswert 0 %).

## Patentansprüche

1. Orthorhombische grünstichige Bleichromatpigmente, die Bleichromat und Bleisulfat im Gew.-Verhältnis 60 : 40 bis 100 : 0 enthalten und charakterisiert sind durch eine Farbstärke von 0,067 bis 0,103 bei Standardfarbtiefe 1/25 gemäss DIN 53235 und durch einen Opazitätsfaktor $Y_{schwarz}/ Y_{weiss}$ von 0,78 bis 0,87, welche durch die Vermischung der wässrigen Lösung eines Bleisalzes mit der wässrigen Lösung eines Chromates und erforderlichenfalls eines Sulfates in Gegenwart eines Ueberschusses an Bleiionen von 0,003—0,012 Mol pro Liter über die stöchiometrische Menge während bzw. nach der Fällung und unter hoher Turbulenz erhältlich sind, wobei auf den Bleichromatpigmenten während der Fällung oder durch eine Nachbehandlung ein Ueberzug eines anorganischen Umhüllungsmittels erzeugt wird und die so erhaltenen Bleichromatpigmente auf übliche Art aufgearbeitet werden.

2. Bleichromatpigmente gemäss Anspruch 1, enthaltend Bleichromat und Bleisulfat im Gew.-Verhältnis 65 : 35 bis 90 : 10 und charakterisiert durch die gemäss DIN 5033 bestimmten Normfarbwerte X, Y und Z, welche innerhalb des durch die Koordinate $57,0 \leqq X \leqq 61,5$, $61,0 \leqq Y \leqq 67,0$ und $4,0 \leqq Z \leqq 7,0$ begrenzten Farbraums liegen.

3. Bleichromatpigmente gemäss Anspruch 2, enthaltend Bleichromat und Bleisulfat im Gew.-Verhältnis 75 : 25 bis 88 : 12.

4. Bleichromatpigmente gemäss Anspruch 1, enthaltend 2—40 % eines anorganischen Umhüllungsmittels.

5. Bleichromatpigmente gemäss Anspruch 1, enthaltend 2—20 % eines anorganischen Umhüllungsmittels.

6. Bleichromatpigmente gemäss Anspruch 1, enthaltend 3—10 % eines anorganischen Umhüllungsmittels.

7. Bleichromatpigmente gemäss Anspruch 1 dadurch erhältlich, dass man die Turbulenz durch hohe Strömungsgeschwindigkeit oder mechanisches Rühren erzeugt.

8. Orthorhombische Bleichromatpigmente enthaltend Bleichromat und Bleisulfat im Gewichtsverhältnis 91 : 9 bis 100 : 0, welche durch die Vermischung der wässrigen Lösung eines Bleisalzes mit der wässrigen Lösung eine Chromates und erforderlichenfalls eines Sulfates in Gegenwart eines Ueberschusses an Bleiionen von 0,003—0,012 Mol pro Liter über die stöchiometrische Menge während bzw. nach der Fällung und unter hoher Turbulenz erhältlich sind, wobei auf den Bleichromatpigmenten während der Fällung oder durch eine Nachbehandlung ein Ueberzug eines anorganischen Umhüllungsmittels erzeugt wird und die so erhaltenen Bleichromatpigmente auf übliche Art aufgearbeitet werden.

9. Orthorhombische Bleichromatpigmente gemäss Anspruch 8, wobei das Gewichtsverhältnis Bleichromat zu Bleisulfat 91 : 9 bis 96 : 4 beträgt.

10. Hochmolekulares organisches Material enthaltend ein Bleichromatpigment gemäss Anspruch 1.

## Revendications

1. Pigments au chromate de plomb, orthorhombiques et tirant sur le vert, contenant du chromate de plomb et du sulfate de plomb selon une proportion pondérale de 60 : 40 à 100 : 0, et caractérisés par un pouvoir colorant de 0,067 à 0,103 pour l'intensité de couleur normalisée 1/25 selon DIN 53 235 et par un facteur d'opacité $Y_{noir} / Y_{blanc}$ de 0,78 à 0,87, pigments que l'on peut obtenir par mélange de la solution aqueuse d'un sel de plomb à la solution aqueuse d'un chromate et éventuellement d'un sulfate, en présence d'un excès d'ions plomb de 0,003—0,012 mole par litre par rapport à la quantité stoechiométrique, pendant ou après la précipitation et sous l'effet d'une turbulence élevée, un revêtement

EP 0 169 810 B1

d'un agent d'enrobage inorganique étant produit sur le pigments au chromate de plomb pendant la précipitation ou sous l'effet d'un post-traitement, les pigments au chromate de plomb ainsi obtenus étant traités de la manière habituelle.

2. Pigments au chromate de plomb selon la revendication 1, contenant du chromate de plomb et du sulfate de plomb selon un rapport pondéral de 65 : 35 à 90 : 10, caractérisés en ce que les coordonnées trichromatiques X, Y et Z déterminées selon DIN 5033 se trouvent dans la partie de l'espace trichromatique délimité par les coordonnées $57{,}0 \le X \le 61{,}5$, $61{,}0 \le Y$ $67{,}0$ et $4{,}0 \le Z \le 7{,}0$.

3. Pigments au chromate de plomb selon la revendication 2, contenant du chromate de plomb et du sulfate de plomb selon un rapport pondéral de 75 : 25 à 88 : 12.

4. Pigments au chromate de plomb selon la revendication 1, contenant 2—40 % d'un agent d'enrobage inorganique.

5. Pigments au chromate de plomb selon la revendication 1, contenant 2—20 % d'un agent d'enrobage inorganique.

6. Pigments au chromate de plomb selon la revendication 1, contenant 3—10 % d'un agent d'enrobage inorganique.

7. Pigments au chromate de plomb selon la revendication 1, que l'on peut obtenir grâce à l'obtention de la turbulence par une vitesse d'écoulement élevée ou par agitation mécanique.

8. Pigments au chromate de plomb orthorhombiques contenant du chromate de plomb et du sulfate de plomb selon un rapport pondéral de 91 : 9 à 100 : 0, que l'on peut obtenir par mélange de la solution aqueuse d'un sel de plomb à la solution aqueuse d'un chromate et si nécessaire d'un sulfate en présence d'un excès d'ions plomb de 0,003—0,012 mole par litre au-delà de la quantité stoechiométrique, pendant ou après la précipitation et moyennant une turbulence élevée, un revêtement d'un agent d'enrobage inorganique étant réalisé sur les pigments au chromate de plomb pendant la précipitation ou du fait d'un post-traitement, et les pigments au chromate de plomb ainsi obtenus étant traités de la manière usuelle.

9. Pigments au chromate de plomb orthorhombiques selon la revendication 8, dans lesquels le rapport pondéral du chromate de plomb au sulfate de plomb est de 91 : 9 à 96 : 4.

10. Matériau organique à masse moléculaire élevée contenant un pigment au chromate de plomb selon la revendication 1.

**Claims**

1. An orthorhombic lead chromate pigment of greenish hue, which contains lead chromate and lead sulfate in the weight ratio of 60 : 40 to 100 : 0, and which is characterised by a tinctorial strength of 0.067 to 0.103 at a standard depth of shade of 1/25 in accordance with DIN 53235 and by an opacity factor $Y_{black}/Y_{white}$ of 0.78 to 0.87, which pigment is obtainable by mixing the aqueous solution of a lead salt with the aqueous solution of a chromate and, if necessary, of a sulfate in the presence of an excess of lead ions of 0.003—0.012 mole per litre over the stoichiometric amount, during or after the precipitation and under high turbulence, a coating of an inorganic coating agent being produced on the lead chromate pigment during precipitation or by an aftertreatment, and the lead chromate pigment thus obtained being worked up in a customary manner.

2. A lead chromate pigment according to claim 1, containing lead chromate and lead sulfate in the weight ratio of 65 : 35 to 90 : 10 and characterised by the tristimulus values X, Y and Z determined in accordance with DIN 5033, which values lie within the colour space bounded by the coordinates $57.0 \le X \le 61.5$, $61.0 \le Y \le 67.0$ and $4.0 \le Z \le 7.0$.

3. A lead chromate pigment according to claim 2, containing lead chromate and lead sulfate in the weight ratio of 75 : 25 to 88 : 12.

4. A lead chromate pigment according to claim 1, containing 2—40 % of an inorganic coating agent.

5. A lead chromate pigment according to claim 1, containing 2—20 % of an inorganic coating agent.

6. A lead chromate pigment according to claim 1, containing 3—10 % of an inorganic coating agent.

7. A lead chromate pigment according to claim 1, obtainable by producing the turbulence by means of a high rate of flow or by mechanical stirring.

8. An orthorhombic lead chromate pigment containing lead chromate and lead sulfate in the weight ratio of 91 : 9 to 100 : 0, which pigment is obtainable by mixing the aqueous solution of a lead salt with the aqueous solution of a chromate and, if necessary, of a sulfate in the presence of an excess of lead ions of 0.003—0.012 mole per litre over the stoichiometric amount, during or after the precipitation and under high turbulence, a coating of an inorganic coating agent being produced on the lead chromate pigment during precipitation or by an aftertreatment, and the lead chromate pigment thus obtained being worked up in a customary manner.

9. An orthorhombic lead chromate pigment according to claim 8, where the weight ratio of lead chromate to lead sulfate is 91 : 9 to 96 : 4.

10. A high molecular weight organic material containing a lead chromate pigment according to claim 1.

9

Figur 1

a

12 mm

1,5mm

b

5mm

c

Beispiel 1, Figur 2

Beispiel 2, Figur 3

Beispiel 3, Figur 4

EP 0 169 810 B1

Beispiel 4, Figur 5

5

Beispiel 5, Figur 6

Beispiel 6, Figur 7

Beispiel 7, Figur 8